# EUROPÄISCHE PATENTSCHRIFT

(11) **EP 1 440 226 B1**
(45) Veröffentlichungstag und Bekanntmachung des Hinweises auf die Patenterteilung: **20.08.2008**
(21) Anmeldenummer: 02781270.0
(22) Anmeldetag: 18.10.2002
(51) Int. Cl.: F01N 3/022, F01N 3/023, F01N 3/027, F01N 3/035, F01N 3/037, F01N 3/28

(54) **OFFENER PARTIKELFILTER MIT HEIZELEMENT**
OPEN PARTICULATE FILTER COMPRISING A HEATING ELEMENT
FILTRE PARTICULAIRE OUVERT MUNI D'UN ELEMENT CHAUFFANT

(30) Priorität: 29.10.2001 DE 20117659 U
(43) Veröffentlichungstag der Anmeldung: 28.07.2004
(73) Patentinhaber: Emitec Gesellschaft für Emissionstechnologie mbH, 53797 Lohmar (DE)
(72) Erfinder: TREIBER, Peter, 40789 Monheim (DE)
(74) Vertreter: Kahlhöfer, Hermann
(86) Internationale Anmeldenummer: PCT/EP2002/011677
(87) Internationale Veröffentlichungsnummer: WO 2003/038247

(56) Entgegenhaltungen:
- DE-A- 19 704 147
- GB-A- 1 501 381
- JP-A- 2000 145 430
- US-A- 4 686 827
- US-A- 4 718 926
- US-A- 4 829 766

## Beschreibung

Die Erfindung betrifft ein System zur Reinigung von Abgasen mobiler Verbrennungskraftmaschinen, insbesondere von Dieselmotoren.

Für eine Verringerung der Schadstoffemissionen und insbesondere der Partikelemissionen aus Dieselmotoren ist die Verwendung von Partikelfiltern aus den verschiedensten Filtermaterialien bekannt, wie z.B. Keramikmonolithen, Siliziumcarbid, Sintermetalle oder metallische, extrudierte oder lagenweise aufgebaute Wickelfilter. Da sich während des laufenden Betriebes eines Dieselmotors eine mehr oder weniger große Anzahl von Partikeln im Filter ansammelt beziehungsweise absetzt, ist gelegentlich eine Regeneration der Partikelfilter erforderlich, um die Funktionsfähigkeit eines solchen Partikelfilters und des entsprechend ausgerüsteten Dieselmotors über einen längeren Zeitraum zu gewährleisten.

Hierfür sind mehrere Regenerationsverfahren bekannt. Am häufigsten wird die sogenannte thermische Regeneration eingesetzt, bei der die im Partikelfilter angesammelten Partikel verbrannt werden. Hierzu sind üblicherweise Abgastemperaturen oberhalb 600° C erforderlich, die bei modernen Dieselmotoren und bei bestimmten Teillastbetriebszuständen jedoch nicht immer erreicht werden, so dass die Partikelfilter-Regeneration "freiwillig" nur unzureichend oder gar nicht durchgeführt wird. Dies hat Beschädigungen an den Filtern beziehungsweise des Dieselmotors oder Leistungseinbußen zur Folge.

Außerdem sind sogenannte passive Regenerationsverfahren bekannt, bei denen dem Kraftstoff die Regeneration unterstützende und die Partikelemission verringernde Additive zugegeben werden, welche insbesondere die Funktion haben, die für die Regeneration erforderlichen Abgastemperaturen zu senken. Hierzu werden bekanntermaßen Kraftstoffadditive auf der Basis von Eisen, Zer, Mangan, Zink, Platin, Kupfer oder Blei verwendet, wobei beispielsweise Abgastemperaturen ab 300° C für eine Regeneration des Filtermaterials ausreichend sind.

Ein weiteres Verfahren betrifft das sogenannte CRT-System ("continuous regeneration trap"). Dabei wird das Abgas zunächst durch einen Oxidationskatalysator und anschließend in einen Rußfilter geleitet. Der Oxidationskatalysator hat die Aufgabe, im Abgas enthaltene Stickstoffmonoxide (NO) in Stickstoffdioxid (NO₂) umzuwandeln. Ein erhöhter Anteil von Stickstoffdioxid hat den Vorteil, dass in dem nachgeschalteten Partikelfilter Redox-Reaktionen ablaufen, wobei Kohlenstoff (C) zu Kohlendioxid (CO₂) oxidiert und der Stickstoffdioxid (NO₂) zu reinem Stickstoff (N₂) reduziert wird. Dies hat die Folge, dass insbesondere Kohlenmonoxid (CO) und langkettige Kohlenwasserstoffe (HC) bereits in einem Temperaturbereich zwischen 200° C und 450° C fast vollständig konvertiert werden. Bei diesen CRT-Systemen ist jedoch zu beachten, dass hierzu nur ein nahezu schwefelfreier Dieselkraftstoff (kleiner 10 ppm S) verwendet werden sollte, um das oben beschriebene Redox-System nicht zu gefährden.

Neben den passiven Regenerationsverfahren sind auch aktive Regenerationsmöglichkeiten bekannt. Dabei wird der Partikelfilter direkt mit einem Brenner oder elektrisch beheizt und so eine periodische Abreinigung des Partikelfilters bewirkt. Diese aktive Zufuhr von Wärmeenergie erfolgt im wesentlichen in Abhängigkeit der Abgastemperatur, der Motordrehzahl und/oder dem Abgasgegendruck vor dem Partikelfilter. Werden beispielsweise entsprechende Grenzwerte für die Abgastemperatur, die Motordrehzahlen und/oder den Abgasgegendruck für den jeweiligen Dieselmotor vorgegeben, kann die Zufuhr von thermischer Energie entsprechend ein- oder ausgeschaltet werden. Üblicherweise ist die Hauptregelgröße hierbei der Abgasgegendruck in Abhängigkeit der jeweiligen Motordrehzahl und demzufolge auch der Abgasvolumenstrom. Steigt der Abgasgegendruck an, ist dies ein Zeichen dafür, dass der Partikelfilter entsprechend höher beladen ist und eine Regeneration durchgeführt werden sollte. Reichen die Abgastemperaturen allein nicht aus, um eine passive, gegebenenfalls Additiv-unterstützte Regeneration durchführen zu können, muss eine zusätzliche Temperaturerhöhung des Abgases vor dem Eintritt in den Partikelfilter bewirkt werden. Dabei ist gewährleistet, dass die im Partikelfilter angesammelten Partikel (überwiegend Russ) in gasförmige Produkte (z.B. Kohlendioxid (CO₂) oder Wasserdampf (H₂O)) umgewandelt werden.

Betreffend die Ausgestaltung derartiger Partikelfilter sind Wabenstrukturen bekannt, die einen lagenweisen Aufbau von Filtermaterial aufweisen. Die Lagen aus porösem oder hochporösem Material werden dabei so gestapelt und/oder gewickelt, dass für das Abgas zumindest teilweise durchströmbare Kanäle begrenzt werden. Durch abwechselndes Verschließen der Kanäle nahe der Eintrittsseite beziehungsweise der Austrittsseite des Partikelfilters wird eine Strömung des Abgases durch die porösen Wände aus Filtermaterial erzwungen. Dies hat zur Folge, dass einerseits die Anzahl der Kanäle in einem solchen Partikelfilter begrenzt ist, da die Verschlusselemente zum Verstopfen der Kanäle eine bestimmte Größe nicht unterschreiten können, andererseits wird der für das Abgas anströmbare Querschnitt des Partikelfilters auf nahezu die Hälfte reduziert. Dies hat neben einer besonders großvolumigen Bauweise derartiger Filter auch einen sehr hohen Abgasgegendruck zur Folge, unabhängig davon, welche Mengen an Partikeln bereits in dem Partikelfilter gespeichert sind.

Aus der GB -A- 1 501 381 geht beispielsweise ein Filter bzw. katalytischer Reaktor hervor, der mit gewellten Metalldrahtlagen und Lagen aus losen Metalloxidfasern gebildet ist. Dabei werden insbesondere Spiralformen vorgeschlagen, die letztendlich einen Filter für Abgase bilden, wobei das Abgas mittels der Wellungen hin zur Faserlage bewegt wird. Außerdem wird vorgeschlagen, das Metalldrahtgeflecht erforderlichenfalls elektrisch beheizbar zu gestalten.

Weiterhin geht aus der DE -A- 197 04 147 ein hitzebeständiger und regenerierbarer Filterkörper hervor, wobei in den einzelnen Strömungswegen des Filterkörpers mindestens eine erste Filterstufe und eine zweite, feinere Filterstufe angeordnet sind, durch die das gesamte Abgas hindurch bewegt wird. Auch dieser Filter kann selbst elektrisch beheizbar ausgeführt sein.

Des Weiteren sei noch auf die US -A- 4 829 766 verwiesen, die einen klassischen Filterzylinder beschreibt, bei dem das gesamte Abgas radial durch die Wand eines Partikelfilters hindurch geführt wird. Dort wird vorgeschlagen, die Filterwände mit unterschiedlichen Materialien herzustellen und gegebenenfalls eine elektrische Heizung vorzusehen.

Zudem sei auch auf den Offenbarungsinhalt der US -A- 4 686 827 verwiesen, die eine Hintereinanderschaltung eines Heizelements und eines Wandfilters zeigt.

Schließlich sei hier auf die JP-A- 2000 145430 verwiesen, die einen Wandfilter in einer Abgasleitung zeigt, der in weniger als 1 m Entfernung vom Verbrennungsmotor angeordnet ist.

Demzufolge ist es Aufgabe der Erfindung, ein System zur Reinigung von Abgasen mobiler Verbrennungskraftmaschinen anzugeben, wobei die Filterung des Abgases mit deutlich verringertem Abgasgegendruck durchgeführt werden kann. Weiterhin soll das System in der Lage sein, unabhängig von dem Betriebszustand der Verbrennungskraftmaschine (Kaltstartphase, Teillastzustände, etc.) und der Position im Abgassystem, insbesondere in Hinblick auf den Abstand von der Verbrennungskraftmaschine (z.B. im Unterboden eines Automobils) eine Regeneration des Partikelfilters sicherzustellen.

Diese Aufgaben werden gelöst durch ein System zur Reinigung von Abgasen mobiler Verbrennungskraftmaschinen mit den Merkmalen des Anspruchs 1. Weitere vorteilhafte Ausgestaltungen sind in den abhängigen Ansprüchen beschrieben, wobei die dort aufgezeigten Merkmale einzeln oder in beliebiger, sinnvoller Kombination miteinander auftreten können.

Das erfindungsgemäße System zum Reinigen von Abgasen mobiler Verbrennungskraftmaschinen, insbesondere von Dieselmotoren, umfasst mindestens einen offenen Partikelfilter mit einer Strömungsfreiheit von mindestens 20 % und mindestens ein Heizelement. Zunächst sei hier angemerkt, dass prinzipiell jede Art einer mobilen Verbrennungskraftmaschine dem erfindungsgemäßen System vorgeschaltet sein kann, die Partikelverunreinigungen oder dergleichen in dem Abgasstrom erzeugt. Dies gilt beispielsweise auch für Otto- oder Gasmotoren. Das mindestens eine Heizelement beruht auf dem Prinzip der Widerstandsheizung, wobei ein elektrisch leitfähige Material zumindest zeitweise von einem Strom durchflossen wird. Aufgrund des Ohmschen Widerstandes wird Wärme erzeugt, die über die Oberfläche des Heizelementes an die Umgebung abgegeben wird. Hierbei ist ein Wärmeübergang von dem Heizelement hin zu dem an dem Heizelement vorbeiströmenden Abgasstrom bevorzugt. Prinzipiell kommen somit hinsichtlich des zu verwendenden Materials elektrisch leitfähige metallische oder keramische Werkstoffe zum Einsatz, wobei diese generell als Draht, Gewebe, Sinterkörper, Bleche, Gitter oder dergleichen ausgeführt sein können.

Die Partikelfalle ist im Gegensatz zu den eingangs beschriebenen, teilweise geschlossenen Filtersystemen offen, weil keine Strömungssackgassen vorgesehen sind. Diese Eigenschaft wird dadurch beschrieben, dass eine Strömungsfreiheit von mindestens 20 % gegeben ist. Strömungsfreiheit bedeutet in diesem Zusammenhang, dass in jedem beliebigen Querschnitt mindestens 20 % der Fläche durchschaubar sind, das heißt im wesentlichen zusammenhängend und frei von Einbauten wie Strömungsleitflächen oder dergleichen. Das heißt mit anderen Worten auch, dass bei einer stirnseitigen Ansicht eines solchen Partikelfilters zumindest teilweise durch die Kanäle hindurchgeschaut werden kann, sofern die Einbauten alle etwa die gleiche Einbaulage haben, also fluchtend angeordnet hintereinander sind. Dies ist bei Wabenkörpern aus zumindest teilweise strukturierten Blechlagen typischerweise gegeben. Die Strömungsfreiheit bedeutet aber für nicht miteinander fluchtende Einbauten nicht zwingend, dass man tatsächlich teilweise durch einen solchen Wabenkörper hindurchschauen kann. Zur Erläuterung der Blickoffenheit sei hier exemplarisch offenbart, dass beispielsweise bei einer Partikelfalle mit einer Kanaldichte von ca. 600 cpsi (cells per square inch) mit einem hydraulischen Durchmesser von 0,08 mm und einer Strömungsfreiheit von 20 %, eine frei durchschaubare Fläche von mehr als 0,1 mm² bereitgestellt wird. Dabei beträgt die Strömungsfreiheit vorteilhafterweise mindestens 40 % oder sogar mindestens 60 %. Diese Ausgestaltung hat zur Folge, dass der sich vor dem Partikelfilter aufbauend Abgasgegendruck deutlich reduziert wird. Da im Eintrittsbereich der Partikelfalle keine verschlossenen Kanäle anzutreffen sind, dient auch die gesamt Eintrittsfläche beziehungsweise die gesamte Anzahl der Kanäle zur Aufnahme des anströmenden Abgasstromes. Daraus folgt ebenfalls, dass eine deutlich vergrößerte Oberfläche bereitgestellt wird, welche zur Filterung des Abgasstromes herangezogen wird.

Zur weiteren Erläuterung sei hinzugefügt, dass ein Partikelfilter dann als offen bezeichnet werden kann, wenn er grundsätzlich von Partikeln vollständig durchlaufen werden kann, und zwar auch von Partikeln, die erheblich größer als die eigentlich auszufilternden Partikel sind. Dadurch kann ein solcher Filter selbst bei einer Agglomeration von Partikeln während des Betriebes nicht verstopfen. Ein geeignetes Verfahren zur Messung der Offenheit eines Partikelfilters ist beispielsweise die Prüfung, bis zu welchem Durchmesser kugelförmige Partikel noch durch einen solchen Filter rieseln können. Bei den vorliegenden Anwendungsfällen ist ein Filter insbesondere dann offen, wenn Kugeln von größer oder gleich 0,1 mm Durchmesser noch hindurchrieseln können, vorzugsweise Kugeln mit einem Durchmesser oberhalb von 0,2 mm, insbesondere Kugeln mit einem Durchmesser von mehr als 0,3 mm.

Beim Kontakt des durch die Kanäle strömenden Abgasstromes mit dem Partikelfilter werden die im Abgas enthaltenen Rußpartikel oder dergleichen angelagert, gespeichert beziehungsweise direkt regeneriert. Die direkte Regeneration erfolgt beispielsweise dann, wenn gerade die benötigten Reaktionspartner nahe der Anlagerungsstelle des Rußpartikels vorhanden sind. Anderenfalls dient die Partikelfalle dazu, die Verweilzeit der umzusetzenden Rußpartikel in der Partikelfalle zu verlängern, bis der hindurchströmende Abgasstrom die benötigten Reaktionspartner (Stickstoffdioxid, Sauerstoff, etc.) zur Verfügung stellt. Die zur Regeneration benötigten Temperaturen werden durch das Abgas selbst bereitgestellt, wobei dieses gegebenenfalls zuvor mittels des wenigstens einen Heizelementes auf Temperaturen oberhalb 300° C, insbesondere oberhalb 500° C erwärmt wurde.

Zusätzlich haben der mindestens eine Partikelfilter und das mindestens eine Heizelement zusammen ein Gesamtvolumen, welches kleiner als 80 % eines Hubraumvolumens der Verbrennungskraftmaschine ist, insbesondere kleiner 50 % und bevorzugt kleiner 10 %. Bekanntermaßen wird das Abgas der Verbrennungskraftmaschine in Brennkammer beziehungsweise Zylindern durch Verbrennung eines Kraftstoff-Luft-Gemisches erzeugt. Bekannte Verbrennungskraftmaschinen weisen bekanntermaßen 2, 4, 5, 6, 8 oder 12 derartige Zylinder auf, wobei alle Zylinder zusammen ein Hubraumvolumen haben. Für übliche Personenkraftwagen liegen die Hubraumvolumina beispielsweise zwischen 1,2 und 4,21, bei Motorrädern liegt das Hubraumvolümen bei etwa 0,25 bis 1,51. Das hier vorgeschlagene System hat demnach ein Gesamtvolumen, welches deutlich kleiner als das Hubraumvolumen der Verbrennungskraftmaschine ausgeführt ist. Dabei kann gerade bei einer motomahen Anordnung des Systems das Gesamtvolumen unter Umständen noch weiter reduziert werden, so dass dies kleiner als 1 % des Hubraumvolumens ausgeführt ist. Das Gesamtvolumen bezieht sich dabei auf die Summe der Kanalwände und der Kanäle des Partikelfilters und des Heizelementes. Gerade in Hinblick auf die beengten Platzverhältnisse ist es dabei besonders vorteilhaft, den mindestens einen Partikelfilter und das mindestens eine Heizelement in ein gemeinsames Gehäuse zu integrieren.

Gemäß einer weiteren Ausgestaltung weist der mindestens eine Partikelfilter wenigstens einen Wabenkörper aus zumindest teilweise strukturierten Lagen aus mindestens einer Metallfolie und mindestens einer Filterlage auf, die so angeordnet sind, dass für das Abgas durchströmbare Kanäle bebildet sind. Die Metallfolien haben hierbei bevorzugt eine Foliendicke kleiner 50 µm, insbesondere kleiner 30 µm und vorteilhafterweise sogar kleiner 15 µm. Insofern wird die oberflächenspezifische Wärmekapazität des Partikelfilters reduziert, so dass gerade in der Kaltstartphase der Verbrennungskraftmaschine dem Abgas nicht unnötig thermische Energie entzogen wird, die beispielsweise zur Regeneration der gespeicherten Rußpartikel benötigt wird. Die Filterlage besteht im wesentlichen aus einem Fasermaterial, welches beispielsweise zu einem Gewebe oder Gestrick verbunden ist. Alternativ dazu können beispielsweise bekannte Sintermaterialien oder dergleichen hierfür eingesetzt werden, die zur Speicherung von Partikeln oder Verunreinigungen, wie sie in derartigen Abgasen vorkommen, geeignet sind. Die Filterlagen haben dabei eine Filterlagendicke, die bevorzugt kleiner als 3 mm beträgt, insbesondere kleiner 1,5 mm, vorzugsweise kleiner 0,5 mm.

Bezüglich der Anzahl der Kanäle, die ein solcher Wabenkörper aufweist, so sind vorteilhafterweise Kanaldichten (Kanalanzahl pro Einheitsquerschnittsfläche) im Bereich von 50 cpsi bis 1500 cpsi ("cells per square inch") vorzusehen, insbesondere in einem Bereich zwischen 200 cpsi und 1000 cpsi. Mit steigender Kanaldichte wird eine zunehmende Oberfläche des Wabenkörpers generiert, welche mit dem vorbeiströmenden Abgas in Kontakt gelangen kann. Insofern kann auf diese Weise die Effektivität eines solchen Partikelfilters auf über 98 % gesteigert werden. Die Effektivität beschreibt dabei das Verhältnis von den produzierten Rußpartikeln beziehungsweise Verunreinigungen zu den umgesetzten beziehungsweise gespeicherten Rußpartikeln beziehungsweise Verunreinigungen. Dies bedeutet mit anderen Worten, dass lediglich 2 % der von der Verbrennungskraftmaschine erzeugten Rußpartikel nach dem Durchströmen des vorgeschlagenen Systems noch im Abgas befindlich sind. Dabei ist nicht zwingend erforderlich, dass sehr viele Rußpartikel gespeichert sind, vielmehr ist hier die Umsetzungs- und Speicherungseffektivität des Partikelfilters zusammengefasst.

Gemäß einer weiteren Ausgestaltung hat die mindestens eine Filterlage eine mittlere Porosität von mindestens 70 %, insbesondere mindestens 85 % und bevorzugt größer als 95 %. Mit der mittleren Porosität ist hierbei gemeint, dass die Filterlage Öffnungen, Poren, Freiräume, Lunker oder dergleichen aufweist, die so bemessen sind, dass diese mindestens 70 % eines Einheitsvolumens der Filterlage ausmachen. Aufgrund der Tatsache, dass die Filterlage eine zumeist unregelmäßige Struktur der Faser aufweist, ist hier von einer gemittelten Porosität über die für das Abgas durchströmbare Filterlage gemeint. Besteht die Filterlage beispielsweise aus mehreren unterschiedlichen Materialien beziehungsweise Porositäten, so ist auch hier ein gemittelter Wert dieser mehreren Komponenten gemeint. Die Porosität hat entscheidenden Einfluss auf die Speicherungs- bzw. Anlagerungsvorgänge, wobei Partikel mit einer Größe im Bereich zwischen 20 nm und 100 nm bevorzugt mit Partikelfiltern einer Porosität zwischen 80 % und 90 % konvertiert werden, während beispielsweise bei größeren Partikeln eine höhere Porosität zum Einsatz kommt. Dies hat seinen Ursprung in den Unterschiedlichen Anlagerungsmechanismen, insbesondere im Hinblick auf die stattfindenden Diffusionsvorgänge.

Nach einer vorteilhaften Weiterbildung hat die mindestens eine Metallfolie eine Struktur, die bevorzugt mit Öffnungen und/oder Umlenkflächen versehen ist, welche eine Umlenkung von Teilabgasströmen hin zu der mindestens einen Filterlage bewirken. Insofern werden die in den Teilabgasströmen enthaltenen Partikel durch die im wesentlichen im Inneren der Kanäle angeordneten Einbauten (Öffnungen und/oder Umlenkflächen) hin zu dem porösen oder hochporösen Filtermaterial gelenkt, wobei diese dort durch Interception und/oder Impaktion an bzw. in der Filterlage haften bleiben. Diese Einbauten bewirken dabei Druckunterschiede in benachbarten Kanälen, so dass ein verbesserter Filtrationseffekt deshalb zu verzeichnen ist, weil die Druckunterschiede im wesentliche selbständig ausgeglichen werden. Die Öffnungen in der mindestens einen Metallfolie gewährleisten sogenannte "kommunizierende" Kanäle, wobei die Teilabgasströme während des Durchströmens durch den Partikelfilter zumindest zeitweise verschiedene Kanäle durchströmt. Die Öffnungen weisen dabei vorzugsweise einen Durchmesser von 2 mm bis 6 mm auf. Die Umlenkflächen können dabei verschieden ausgeführt sein, insbesondere als kleine Flügel, Vorsprünge, Höcker, Noppen oder dergleichen. Die Struktur der Metallfolie hat primär die Aufgabe, benachbarte Filterlagen voneinander zu beabstanden und zwischen diesen Kanäle auszubilden, wobei die Strukturhöhe und die Strukturlänge im wesentlichen die Form bzw. die Anzahl der Kanäle im Wabenkörper definiert.

Gemäß einer weiteren Ausgestaltung ist das mindestens eine Heizelement im Inneren des Partikelfilters angeordnet. Dies ist beispielsweise so realisiert, dass im Inneren des Partikelfilters ein für einen elektrischen Strom durchströmbarer Leiter angeordnet ist. Dieser Leiter kann beispielsweise eine Metallfolie, ein Draht, eine Zone beziehungsweise Scheibe des Partikelfilters sein. Um einen vorgebbaren Strompfad zu realisieren kann beispielsweise die Filterlage im wesentlichen aus einem elektrisch nicht leitfähigen, insbesondere keramischen Material ausgeführt sein. Das elektrische Heizelement wird mit einer Spannungsquelle verbunden, wobei diese in Abhängigkeit bestimmter Parameter (Abgasgegendruck, Motordrehzahl, Abgastemperatur, etc.) ein- oder ausgeschaltet werden kann.

Gemäß noch einer weiteren Ausgestaltung ist das mindestens eine Heizelement als separate Heizscheibe ausgeführt, welche in Strömungsrichtung des Abgases gesehen dem mindestens einen Partikelfilter vorgeschaltet ist. Das bedeutet, dass das zu reinigende Abgas zunächst durch das Heizelement geführt wird, bevor es anschließend dem mindestens einen Partikelfilter zugeführt wird. Die Heizscheibe kann dabei direkt formschlüssig an beziehungsweise vor dem Partikelfilter angeordnet sein, unter Umständen sogar gemeinsame Komponenten (z.B. Metallfolien, Gehäuse, etc.) aufweisen. Allerdings ist es auch möglich, dass scheibenartig ausgeführte Heizelement in einer gewissen Entfernung vor dem Partikelfilter anzuordnen, wobei die Entfernung (von der Austrittsseite der Heizscheibe bis zur Eintrittsseite des Partikelfilters) bevorzugt kleiner 50 mm, insbesondere kleiner 30 mm ist. Die Heizscheibe weist dabei vorzugsweise ebenfalls eine Wabenstruktur mit für ein Abgas durchströmbaren Kanälen auf.

Gerade bei einer Ausführung des Heizelementes als separate Heizscheibe, welche in einer gewissen Entfernung dem Partikelfilter vorgeschaltet ist, ist es vorteilhaft, das als Heizscheibe ausgeführte Heizelement gegen den mindestens einen Partikelfilter abzustützen. Hierzu werden insbesondere Stützstifte vorgesehen, welche zumindest teilweise in innere Bereiche des Heizelementes und/oder in die Kanäle der Partikelfilter hineinragen. Zur Vermeidung eines ungewollten Stromflusses hin zur Partikelfalle sind derartige Stützstifte bevorzugt mit einer Isolierung versehen, welche z.B. als keramische Beschichtung ausgeführt ist. Weiterhin ist es auch möglich, derartige Stützstifte an den Umfang beziehungsweise dem Gehäuse des Heizelementes und/oder des Partikelfilters anzuordnen. Auch Kombinationen dieser unterschiedlichen Ausführungsformen der Stützstifte sind gegebenenfalls vorteilhaft.

Gemäß einer Weiterbildung des Systems hat das als Heizscheibe ausgeführte Heizelement eine Länge, die kleiner als 60 % der axialen Erstreckung des mindestens einen Partikelfilters ist, insbesondere kleiner 40 % und bevorzugt kleiner 20 %. In Anbetracht der Tatsache dass eine derartige Heizscheibe eine sehr große Oberfläche pro Volumeneinheit bereitstellt, welche zur Aufheizung des vorbeiströmenden Abgasstromes dient, kann die Heizscheibe sehr schmal ausgeführt sein, so dass das System auch unter beengten Platzverhältnissen in ein Abgassystem integriert werden kann. Die Länge der Heizscheibe beträgt dabei vorteilhafterweise höchstens 50 mm, insbesondere weniger als 30 mm und bevorzugt sogar weniger als 10 mm.

Gemäß einer weiteren Ausgestaltung ist das mindestens eine Heizelement zumindest teilweise mit einer katalytisch aktiven, insbesondere oxidierenden, Beschichtung versehen. Dadurch kann insbesondere eine Regeneration nach dem CRT-Prinzip begünstigt werden, da das vorgeschaltete Heizelement als Oxidationskatalysator wirkt, wobei in dem nachgeschalteten Partikelfilter ausreichend Stickstoffdioxid bereitgestellt wird. Insofern stellt dieses System eine besonders raumsparende, hocheffiziente und sehr dynamisch reagierendes System dar. Gegebenenfalls ist das mindestens eine Heizelement dabei scheibenweise aufzubauen, wobei in Strömungsrichtung katalytisch aktiv beschichtete und unbeschichtete Scheiben vorgesehen sind.

Gemäß einer weiteren Ausgestaltung wird vorgeschlagen, dass der mindestens eine Partikelfilter und/oder das mindestens eine Heizelement in einem Abstand von der Verbrennungskraftmaschine angeordnet ist/sind, der größer als 0,7 m ist. Hierbei ist insbesondere der Abstand als die Distanz zu verstehen, welcher der Abgasstrom in der Abgasleitung von den Zylindern der Verbrennungskraftmaschine bis zum Eintritt in das Heizelement und/oder den Partikelfilter benötigt. Gerade bei sehr beengten Platzverhältnissen im motornahen Bereich bei Kraftfahrzeugen ist es gelegentlich notwendig, das System zum Filtern des Abgasstromes beispielsweise in den Unterboden zu verlegen. Dabei kann gerade das erfindungsgemäße System in diesen noch weit vom Motor entfernten Positionen eine nahezu kontinuierliche Regeneration des Filters oder auch eine gezielte, getaktete Regeneration bereitstellen, da die erforderliche Abgastemperatur mittels dem mindestens einen Heizelement generiert werden kann. Dabei werden nur sehr kleine Partikelfilter benötigt.

Die Erfindung wird nun anhand der Figuren näher erläutert, welche besonders vorteilhafte und besonders bevorzugte Ausgestaltungen des erfindungsgemäßen Systems zeigen. In diesem Zusammenhang sei darauf hingewiesen, dass die Erfindung nicht auf die dargestellten Ausführungsformen begrenzt ist.

Es zeigen:
- Fig. 1: Schematisch und in einer Schnittansicht eine Ausführungsform des erfindungsgemäßen Systems mit einem Heizelement und einem offenen Partikelfilter;
- Fig. 2: eine stirnseitige Ansicht einer Ausführungsform eines Heizelementes;
- Fig. 3: eine stirnseitige Ansicht einer Ausführungsform eines Partikelfilters;
- Fig. 4: schematisch und in einer Schnittansicht ein Detail einer Ausführungsform eines Heizelementes;
- Fig. 5: schematisch den Aufbau eines Abgassystems mit einer Ausführung eines erfindungsgemäßen Systems;
- Fig. 6: schematisch und perspektivisch ein Detail einer Ausführungsform eines offenen Partikelfilters; und
- Fig. 7: schematisch und perspektivisch den Aufbau einer Abgasanlage in einem Automobil.

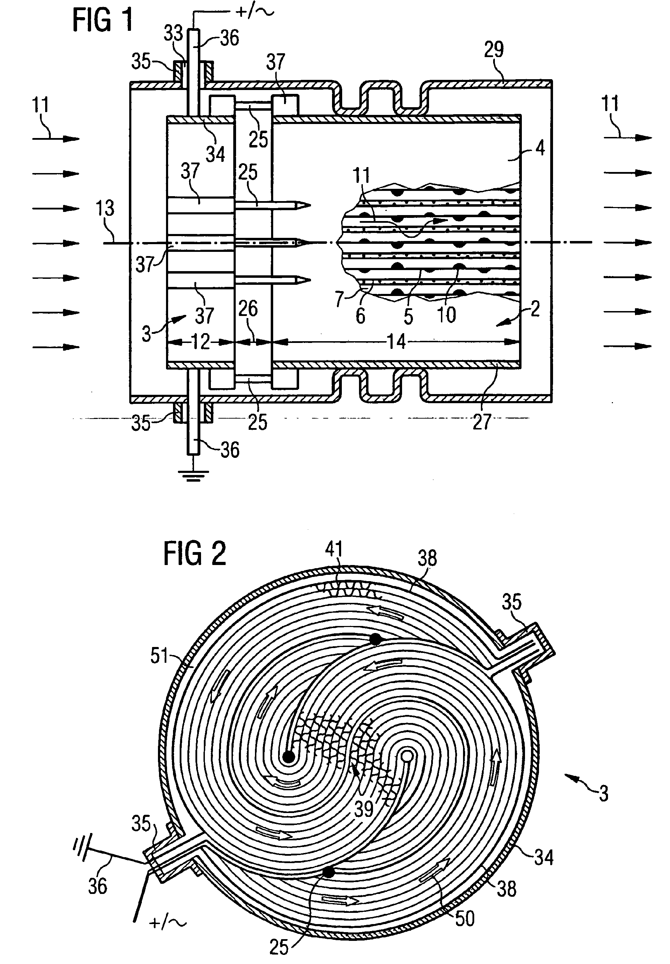

Figur 1 zeigt schematisch und in einer Schnittansicht eine Ausführungsform des erfindungsgemäßen Systems, welches in einer Abgasleitung 29 integriert ist. Das erfindungsgemäße System besteht aus einem Heizelement 3, welchem in Strömungsrichtung 11 ein offener Partikelfilter 2 nachgeschaltet ist. Der offene Partikelfilter 2 umfasst einen Wabenkörper 4, der von einem Gehäuse 27 umgeben ist, über welches der Partikelfilter 2 in der Abgasanlage 29 befestigt ist. Der Wabenkörper 4 umfasst eine Mehrzahl von Metallfolien 5 und Filterlagen 6, die so angeordnet sind, dass für ein Abgas durchströmbare Kanäle 7 gebildet sind. Die Metallfolien 5 sind mit Umlenkflächen 10 versehen, die eine Umlenkung von Teilabgasströmen hin zu der Filterlage 6 beziehungsweise durch diese hindurch bewirken. Der dargestellte Partikelfilter 2 weist eine Erstreckung 14 in Richtung einer Achse 13 auch, die größer ausgeführt ist, als eine Länge 12 in Richtung der Achse 13 des scheibenförmig ausgebildeten Heizelementes 3.

Das Heizelement 3 ist mittels Stützstiften 25 beabstandet von dem Partikelfilter 2 gehaltert, wobei ein Spalt zwischen dem Heizelement 3 und dem nachgeschalteten Partikelfilter 4 gebildet ist. Dieser Spalt beziehungsweise das Heizelement 3 und der Partikelfilter 2 hat/haben eine Entfernung 26, welche bevorzugt kleiner als 30 mm ausgeführt ist. Die Stützstifte 25 können dabei gleichmäßig verteilt an dem Gehäuse 27 beziehungsweise dem das Heizelement 3 begrenzenden Mantelrohr 34 angeordnet sein. Weiterhin ist es ebenfalls möglich, dass sich Stützstifte 25 in innere Bereiche des Partikel filters 2 sowie des Heizelementes 3 hinein erstrecken.

Zur Vermeidung von ungewollten Stromflüssen vom Heizelement 3 hin zum Partikelfilter 2 weisen die Stützstifte 25 eine elektrische Isolierung 37 auf. Die Stromversorgung des Heizelementes 3 verfolgt mittels Elektroden 36, welche durch einen Durchbruch 33 der Abgasleitung 29 hindurchgeführt und mit dem Heizelement 3 kontaktiert werden. Um zu verhindern, dass Abgas durch die Durchbrüche 33 hindurch entweicht, werden diese Durchbrüche mit Dichtungen 35 versehen, welche bevorzugt ebenfalls aus einem elektrisch isolierendem Material wie Keramik sind. Das dargestellte Heizelement 3 kann beispielsweise als extrudierter Monolith ausgebildet sein, wobei eine Erwärmung des Heizelementes 3 mittels eines durchströmenden Strom bewirkt wird, so dass das ihn durchströmende Abgas bevorzugt auf Temperaturen oberhalb von 300° C, insbesondere oberhalb 500° C erhitzt wird.

Figur 2 zeigt schematisch eine stirnseitige Ansicht einer Ausführungsform eines Heizelementes. Das Heizelement 3 weist eine Zellstruktur 39 mit einer Vielzahl von Zellen 41 auf. Die Zellendichte beträgt dabei bevorzugt zwischen 100 und 1200 cpsi ("cells per square inch"). Die Stromversorgung erfolgt über Elektroden 36, welche durch eine Dichtung 35 hindurch zu der Zellstruktur 39 hin geführt wird. Die Zellstruktur 39 weist Halterungen 38 auf, welche bevorzugt aus einem thermisch isolierendem Material ausgeführt sind, so dass vorgebbare Strompfade 50 generiert werden. In der dargestellten Ausführungsform erfolgt die Abnahme des Stroms über die gleiche Dichtung 35, wobei die gegenüberliegende Dichtung 35 lediglich zur Fixierung der Schalen 38 dient. Die Wabenstruktur 29 wird dabei so in einem Mantelrohr 34 positioniert, dass zwischen der Zellstruktur 39 und dem Mantelrohr 34 ein Luftspalt 51 gebildet ist, der sicherstellt, dass das Mantelrohr 34 vom Strom nicht durchflossen wird. Weiterhin zeigt die Figur 2 gleichmäßig verteilte Stützstifte 25, welche bevorzugt mit den Halterungen 38 verbunden sind. Die Halterungen 38 sind vorzugsweise verstärkt ausgeführt, so dass ein Abstützen des Heizelementes 3 über die Stützstifte 25 besonders stabil ausgeführt ist.

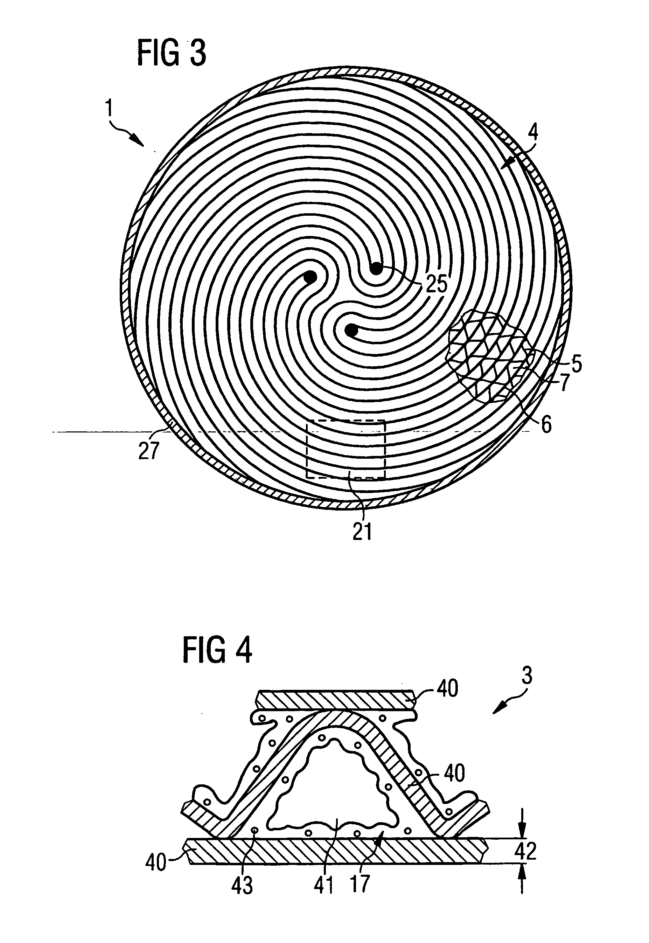

Figur 3 zeigt schematisch eine stirnseitige Ansicht einer Ausführungsform eines Partikelfilters 1. Dieser umfasst einen Wabenkörper 4 und ein diesen Wabenkörper 4 umgebendes Gehäuse 27. Der Wabenkörper ist aus zumindest teilweise strukturierten Lagen aufgebaut, welche eine Mehrzahl von strukturierten Metallfolien 5 und im wesentlichen glatten Filterlagen 6 umfassen. Die so angeordnet sind, dass diese für das Abgas durchströmbare Kanäle 7 bilden. Im zentralen Bereich des Wabenkörpers 4 sind mehrere Stützstifte 25 angedeutet, welche insbesondere an den Wickelpunkten der Lagen angeordnet sind. Die Kanaldichte 21 eines solchen Partikelfilters beträgt vorzugsweise mehr als 600 cpsi ("cells per square inch").

Figur 4 zeigt ein Detail einer Ausführungsform des Heizelementes 3 im Schnitt. Das Heizelement 3 ist hier mit mehreren glatten und gewellten Blechen 40 aufgebaut, wobei diese zumindest teilweise so strukturiert sind, dass Zellen 41 gebildet sind. Die Bleche weisen eine Blechdicke kleiner 30 µm auf, insbesondere kleiner 20 µm und insbesondere kleiner 12 µm. Die Zellen 41 sind mit einer katalytisch aktiven Beschichtung 17 versehen, wobei diese Katalysatoren 43 wie beispielsweise Platin umfasst.

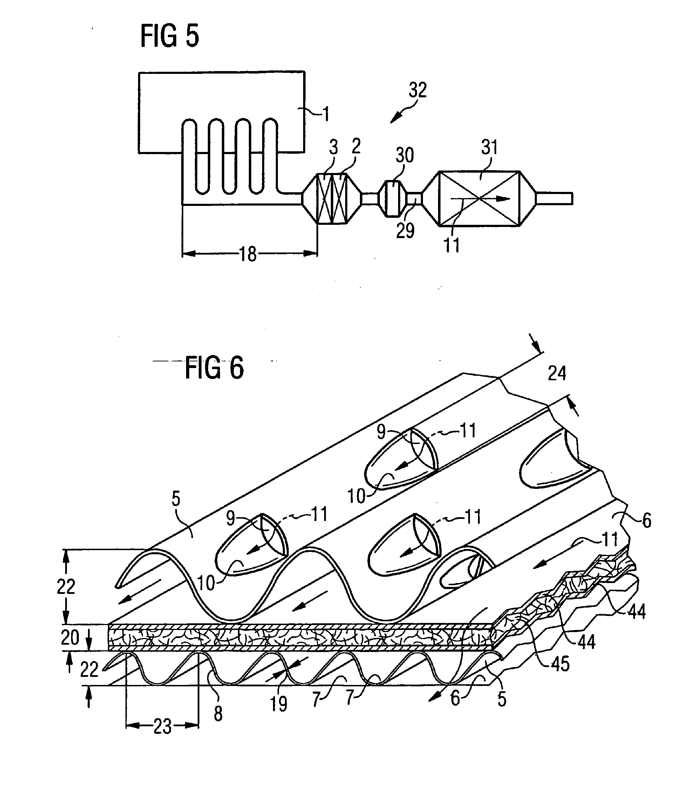

Fig. 5 zeigt schematisch den Aufbau eines Abgassystems 32 für eine Verbrennungskraftmaschine 1. Eine solche Verbrennungskraftmaschine 1 ist bevorzugt als Dieselmotor ausgeführt. Das Abgassystem 32 umfasst in Strömungsrichtung 11 des Abgases folgende Komponenten:
- ein stromaufwärts angeordnetes Heizelement 3, das als Oxidationskatalysator ausgeführt ist,
- einen Partikelfilter 2,
- einen Turbolader 30, und
- einen katalytischen Konverter 31.
Die einzelnen Komponenten können in getrennten Gehäusen oder teilweise gemeinsamen miteinander in einem Gehäuse angeordnet sein und sind über eine Abgasleitung 29 miteinander verbunden. Wie bereits ausgeführt, ist die Kombination mit dem mindestens einen Heizelement insbesondere dann vorteilhaft, wenn der Partikelfilter 2 möglichst nicht sehr nahe an der Verbrennungskraftmaschine 1 angeordnet werden kann. Insbesondere eignet sich hierzu ein Abstand 18 von der Verbrennungskraftmaschine 1, der größer 0,7 m beträgt, Bei kleineren Abständen 18, insbesondere sogar kleiner 30 cm, ist das Heizelement 3 beispielsweise kleiner auszuführen (internen Heizdraht, extrem schmale Scheibe, etc.). Bei einer solchen Anordnung der einzelnen Komponenten wird zunächst mit Hilfe des als Oxidationskatalysator ausgebildeten Heizelementes 3 eine ausreichende Menge von Stickstoffdioxid zur Verfügung gestellt, der im direkt nachgeschalteten Partikelfilter 2 eine Regenerierung (kontinuierlich) der eingelagerten Rußpartikel sicherstellt. Der nachgeschaltete katalytische Konverter 31 kann beispielsweise auch als Hybrid-Konverter ausgeführt sein, wobei dieser Teilbereiche mit unterschiedlicher Wärmekapazität aufweist. Dabei ist dieser so auszulegen, dass er in Strömungsrichtung eine zunehmende Wärmekapazität hat.

Fig. 6 zeigt schematisch und perspektivisch eine weitere Ausführungsform des erfindungsgemäßen Partikelfilters 2 im Detail. Der Partikelfilter 2 umfasst hierbei Metallfolien 5, zwischen die jeweils eine Filterlage 6 angeordnet ist. In der dargestellten Ausführungsform ist die Filterlage 6 mit zwei Metallschichten 44 und einer dazwischen angeordneten Faserschicht 45 gebildet, wobei die fügetechnische Verbindung dieser Schichten in einem Randbereich erfolgt ist, der hier aufgrund der Schnittdarstellung nicht erkennbar ist.

Die Metallfolien 5 haben eine konstante Foliendicke 22 und sind hier mit einer Struktur versehen, während die Filterlage 6 eine im wesentlichen glatte Oberfläche aufweist. Mit Hilfe dieser Struktur der Metallfolien 5 werden Kanäle 7 gebildet, die für ein Abgas in einer Strömungsrichtung 11 durchströmbar sind. Die Metallfolien 5 weisen hier unterschiedliche Strukturhöhen 20 auf, so dass die gebildeten Kanäle 7 auf die Charakteristik des anströmenden Abgasstromes abgestimmt sind. Die hier dargestellte Ausführungsform zeigt im wesentlichen ein Detail eines offenen Filterkörpers. Die Metallfolien 1 sind mit Durchlässen 9 und Umlenkflächen 10 versehen, die eine Umlenkung des Abgasstromes hin zur Filterlage 6 gewährleisten. Dabei werden Druckunterschiede erzeugt, die zur Folge haben, dass Teilabgasströme die Filterlage 6 durchdringen und damit eine Anhaftung bzw. Ablagerung von Rußpartikeln oder ähnlichem in der Faserschicht 45 erfolgt. Vorteilhafterweise haben die Durchlässe 9 jeweils einen Durchmesser 24, der etwa in einem Bereich zwischen 2 mm und 6 mm liegt.

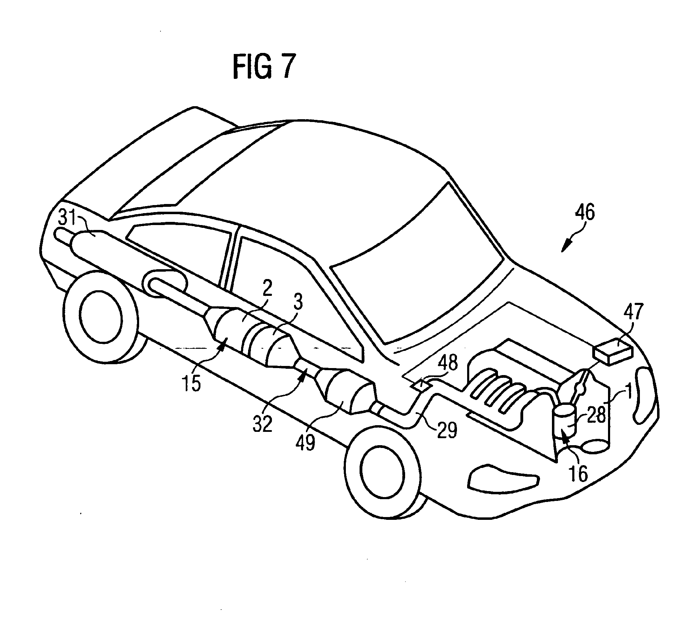

Figur 7 zeigt schematisch den Aufbau eines Abgassystems in einem Automobil 46. Das Automobil 46 weist eine Verbrennungskraftmaschine 1 mit mehreren Zylindern 28 auf, die zusammen ein Hubraumvolumen 16 bilden. Das durch Verbrennung eines Luft-Kraftstoff-Gemisches erzeugte Abgas wird über eine Abgasleitung 29 zunächst einem Oxidationskatalysator 49 und anschließend dem erfindungsgemäßen System umfassend ein Heizelement 3 und einen offenen Partikelfilter 4 zugeführt, wobei das Heizelement 3 und der Partikelfilter 2 gemeinsam ein Gesamtvolumen 15 aufweisen, welches deutlich kleiner als das Hubraumvolumen 16 der Verbrennungskraftmaschine 1 ausgeführt ist. Abschließend durchströmt das Abgas einen katalytischen Konverter 31, wobei dieser bevorzugt auf Komponenten zur Schalldämpfung aufweist. Die Verbrennungskraftmaschine 1 ist zudem mit einer Motorsteuerung 47 verbunden, die vorteilhafterweise mit einer Vielzahl von Sensoren 48 in Verbindung steht. Aufgrund der Werte, welche sich mittels der Sensoren 48 ermitteln lassen, erfolgt vorzugsweise die Steuerung beziehungsweise Regelung des Heizelementes 3. So ist der dargestellte Sensor 48 beispielsweise als Temperaturfühler ausgeführt, welcher die Temperatur des Abgasstromes in der Abgasleitung 29 erfasst. In einem Speicher der Motorsteuerung 47 ist ein Grenzwert abgelegt, wobei das Heizelement 3 dann mit Strom versorgt wird, wenn die ermittelte Abgastemperatur unterhalb des Grenzwertes liegt.

Das vorgeschlagene System zur Reinigung von Abgasen mobiler Verbrennungskraftmaschinen, insbesondere zur Beseitigung von Rußpartikeln, wie sie in Abgasströmen von Dieselmotoren enthalten sind, erlaubt auch in weit entfernten Positionen von der Verbrennungskraftmaschine eine kontinuierliche Regeneration des offenen Partikelfilters. Dabei zeichnet sich das Systems durch einen sehr geringen Druckverlust und eine hohe Effizienz aus.

### Bezugszeichenliste

- 1: Verbrennungskraftmaschine
- 2: Partikelfilter
- 3: Heizelement
- 4: Wabenkörper
- 5: Metallfolie
- 6: Filterlage
- 7: Kanal
- 8: Struktur
- 9: Öffnung
- 10: Umlenkfläche
- 11: Strömungsrichtung
- 12: Länge
- 13: Achse
- 14: Erstreckung
- 15: Gesamtvolumen
- 16: Hubraumvolumen
- 17: Beschichtung
- 18: Abstand
- 19: Foliendicke
- 20: Filterlagendicke
- 21: Kanaldichte
- 22: Strukturhöhe
- 23: Strukturlänge
- 24: Durchmesser
- 25: Stützstift
- 26: Entfernung
- 27: Gehäuse
- 28: Zylinder
- 29: Abgasleitung
- 30: Turbolader
- 31: Katalytischer Konverter
- 32: Abgassystem
- 33: Durchbruch
- 34: Mantelrohr
- 35: Dichtung
- 36: Elektrode
- 37: Isolierung
- 38: Halterung
- 39: Zellstruktur
- 40: Blech
- 41: Zelle
- 42: Blechdicke
- 43: Katalysator
- 44: Metallschicht
- 45: Faserschicht
- 46: Automobil
- 47: Motorsteuerung
- 48: Sensor
- 49: Oxidationskatalysator
- 50: Strompfad
- 51: Luftspalt

## Patentansprüche

1. System zur Reinigung von Abgasen mobiler Verbrennungskraftmaschinen (1), insbesondere von Dieselmotoren, umfassend mindestens einen offenen Partikelfilter (2) mit einer Strömungsfreiheit von mindestens 20 %, bei der in jedem beliebigen Querschnitt des Partikelfilters (2) mindestens 20% der Fläche frei von Einbauten ist, und mindestens ein Heizelement (3), **dadurch gekennzeichnet, dass** der mindestens eine Partikelfilter (2) und das mindestens eine Heizelement (3) zusammen ein Gesamtvolumen (15) haben, welches kleiner als 80 % eines Hubraumvolumens (16) der Verbrennungskraftmaschine (1) ist, insbesondere kleiner 50 % und bevorzugt kleiner 10 %.

2. System nach Anspruch 1, bei dem der mindestens eine Partikelfilter (2) wenigstens einen Wabenkörper (4) aus zumindest teilweise strukturierten Lagen aus mindestens einer Metallfolie (5) und mindestens einer Filterlage (6) umfasst, welche so angeordnet sind, dass für das Abgas durchströmbare Kanäle (7) gebildet sind.

3. System nach Anspruch 2, bei dem die mindestens eine Filterlage (6) eine mittlere Porosität von mindestens 70 % aufweist, insbesondere mindesten 85 % und bevorzugt größer als 95 %.

4. System nach Anspruch 2 oder 3, bei dem die mindestens eine Metallfolie (5) eine Struktur (8) hat, und bevorzugt mit Öffnungen (9) und/oder Umlenkflächen (10) versehen ist, welche eine Umlenkung von Teilabgasströmen hin zu der mindestens einen Filterlage (6) bewirken.

5. System nach einem der vorhergehenden Ansprüche, bei dem das mindestens eine Heizelement (3) im Inneren des Partikelfilters (2) angeordnet ist.

6. System nach einem der vorhergehenden Ansprüche, bei dem das mindestens eine Heizelement (3) eine separate Heizscheibe ist, welche in Strömungsrichtung (11) des Abgases gesehen, dem mindestens einen Partikelfilter (2) vorgeschaltet ist.

7. System nach Anspruch 6, bei dem das als Heizscheibe ausgeführte Heizelement (3) gegen den mindestens einen Partikelfilter (2) abgestützt ist.

8. System nach Anspruch 6 oder 7, bei dem das als Heizscheibe ausgeführte Heizelement (3) eine Länge (12) hat, die kleiner als 60 % der axialen Erstreckung (14) des mindestens einen Partikelfilters (2) ist, insbesondere kleiner 40 % und bevorzugt kleiner 20 %.

9. System nach einem der vorhergehenden Ansprüche, bei dem das mindestens eine Heizelement (3) zumindest teilweise mit einer katalytisch aktiven, insbesondere oxidierenden, Beschichtung (17) versehen ist.

10. System nach einem der vorhergehenden Ansprüche, bei dem der mindestens eine Partikelfilter (2) und/oder das mindestens eine Heizelement (3) in einem Abstand (18) von der Verbrennungskraftmaschine (1) angeordnet ist/sind, der größer als 0,7 m ist.

## Claims

1. A system for cleaning exhaust gases from mobile internal combustion engines (1), in particular diesel engines, comprising at least one open particulate filter (2) having a freedom of flow of at least 20%, whereby in any cross section of the particulate filter (2) at least 20% of the cross sectional area is free of internals and at least one heating element (3) **characterized in** said at least one particulate filter (2) and said at least one heating element (3) together have a total volume (15) being less than 80% of an displacement volume (16) of the internal combustion engine (1), in particular less than 50% and preferred less then 10% of said displacement volume.

2. The system according to claim 1, wherein said at least one particulate filter (2) contains at least one honeycomb body (4) made from at least partially structured layers made from at least one metal foil (5) and at least one filter layer (6), forming passages (7) through which the exhaust gas can flow.

3. The system according to claim 2, wherein said at least one filter layer (6) has a mean porosity of at least 70%, in particular of at least 85% and preferred of at least 95 %.

4. The system according to claim 2 or 3, wherein said at least one metal foil (5) has a structure (8) and said at least one metal foil (5) preferably has openings (9) and/or diverting surfaces (10) which diverting partial exhaust-gas streams towards said at least one filter layer (6).

5. The system according to one of the preceding claims, wherein said at least one heating element (3) is disposed in an interior of said at least one particulate filter (2).

6. The system according to one of the preceding claims, wherein said at least one heating element (3) is constructed as a separate heating disk provided upstream of said at least one particulate filter (2), in flow direction (11) of the exhaust gas.

7. The system according to claim 6, wherein said at least one heating element (3) constructed as a heating disk is supported against said at least one particulate filter (2).

8. The system according to claim 6 or 7, wherein said at least one particulate filter (2) has an axial extent (14), and said at least one heating element (3) constructed as a heating disk has a length (12) being less than 60% of said axial extend (14), in particular less than 40% and preferred less than 20 %.

9. The system according to one of the preceding claims, wherein said at least one heating element (3) is at least in part provided with a catalytically active coating (17), in particular oxidizing coating (17).

10. The system according to one of the preceding claims, wherein said at least one particulate filter (2) and/or said at least one heating element (3) are disposed at a distance (18) of greater than 0.7 m from the internal combustion engine (1).

## Revendications

1. Système pour l'épuration de gaz d'échappement de machines mobiles à combustion interne (1), notamment de moteurs diesel, comprenant au moins un filtre à particules ouvert (2) avec une liberté d'écoulement d'au moins 20 %, où dans n'importe laquelle section transversale du filtre à particules (2) au moins 20 % de la surface est exempte d'éléments encastrés, et au moins un élément chauffant (3), **caractérisé en ce que** l'au moins un filtre à particules (2) et l'au moins un élément chauffant (3) ont communément un volume total (15) qui est plus petit que 80 % d'un volume de cylindrée (16) de la machine à combustion interne (1), notamment plus petit que 50 % et de préférence plus petit que 10 %.

2. Système selon la revendication 1, dans lequel l'au moins un filtre à particules (2) comprend au moins un corps en nids d'abeilles (4) de couches au moins partiellement structurées d'au moins une feuille métallique (5) et d'au moins une couche de filtre (6) qui sont agencées de manière telle que des canaux (7) sont formés pouvant être parcourus par le gaz d'échappement.

3. Système selon la revendication 2, dans lequel l'au moins une couche de filtre (6) a une porosité moyenne d'au moins 70 %, notamment d'au moins 85 % et de préférence plus grande que 95 %.

4. Système selon la revendication 2 ou 3, dans lequel l'au moins une feuille métallique (5) a une structure (8) et est dotée de préférence d'ouvertures (9) et/ou de surfaces de déviation (10), qui provoquent une déviation de flux partiels de gaz d'échappement vers l'au moins une couche de filtre (6).

5. Système selon l'une des revendications précédentes, dans lequel l'au moins un élément chauffant (3) est agencé à l'intérieur du filtre à particules (2).

6. Système selon l'une des revendications précédentes, dans lequel l'au moins un élément chauffant (3) est une vitre chauffante séparée qui, vu dans le sens d'écoulement (11) du gaz d'échappement, est agencée en amont de l'au moins un filtre à particules (2).

7. Système selon la revendication 6, dans lequel l'élément chauffant (3) réalisé en tant que vitre chauffante est supporté contre l'au moins un filtre à particules (2).

8. Système selon la revendication 6 ou 7, dans lequel l'élément chauffant (3) réalisé en tant que vitre chauffante a une longueur (12) qui est plus petite que 60 % de l'extension axiale (14) de l'au moins un filtre à particules (2), notamment plus petite que 40 % et de préférence plus petite que 20 %.

9. Système selon l'une des revendications précédentes, dans lequel l'au moins un élément chauffant (3) est pourvu au moins partiellement d'un revêtement (17) à activité catalytique, notamment oxydante.

10. Système selon l'une des revendications précédentes, dans lequel l'au moins un filtre à particules (2) et/ou l'au moins un élément chauffant (3) est/sont agencé(s) à une distance (18) de la machine à combustion interne (1) qui est plus grande que 0,7 m.
